# EUROPÄISCHE PATENTSCHRIFT

(11) **EP 0 527 302 B1**
(45) Veröffentlichungstag und Bekanntmachung des Hinweises auf die Patenterteilung: **26.04.1995**
(21) Anmeldenummer: 92109333.2
(22) Anmeldetag: 03.06.1992
(51) Int. Cl.: F16F 13/00

(54) **Gummilager mit hydraulischer Dämpfung**
Rubber mount with hydraulic damping
Support en caoutchouc à amortissement hydraulique

(30) Priorität: 13.08.1991 DE 4126673
(43) Veröffentlichungstag der Anmeldung: 17.02.1993
(73) Patentinhaber: Firma Carl Freudenberg, 69469 Weinheim (DE)
(72) Erfinder: Rudolph, Axel, W-6140 Bensheim 3 (DE)

(56) Entgegenhaltungen:
- EP-A- 0 133 588
- EP-A- 0 307 693
- EP-A- 0 354 381
- EP-A- 0 490 717
- Patent Abstracts of Japan vol. 8, no. 238 (M-335)(1675) 31. Okt. 1984 & JP-A- 59 117 929 (TOYODA) 7. Juli 1984
- Patent Abstracts of Japan vol. 7, no. 79(M-204)(1224) 31. März 1983& JP-A- 58 005 549 (TOYODA) 12. Jan. 1983
- Patent Abstracts of Japan vol. 7, no. 120(M-217)(1265) 25. Mai 1983 & JP-A- 58 037 337 (TOYODA) 4. März 1983

## Beschreibung

### Beschreibung für folgende Vertragsstaaten : DE, GB, IT

Die Erfindung betrifft ein Gummilager mit hydraulischer Dämpfung, umfassend ein Trag- und ein Auflager, die durch ein Federelement aus gummielastischem Werkstoff verbunden sind und einen flüssigkeitsgefüllten Arbeitsraum umschließen, der durch eine an dem Traglager festgelegte Trennwand von einem Ausgleichsraum getrennt ist, wobei die Trennwand von zumindest einer Verbindungsöffnung durchdrungen und in einem Teilbereich durch einen nachgiebigen Wandabschnitt gebildet ist, wobei der Ausgleichsraum durch eine an dem Traglager festgelegte Membran nach außen abgeschlossen ist.

Ein solches Gummilager ist aus der DE-PS 27 27 244, Figur 13 und 14, bekannt. Das Gummilager ist so ausgebildet, daß zumindest ein Teil der Trennwand in axialer Richtung durch Anschläge begrenzt, aber beweglich angeordnet ist. Zur Dämpfung großer Schwingungsamplituden tritt die Dämpfungsflüssigkeit durch Dämpfungsöffnungen hindurch. Kleine Schwingungsamplituden werden durch die in axialer Richtung bewegliche Trennwand isoliert, ohne daß ein Austausch der Flüssigkeit durch die Kalibrierbohrungen hindurch zwischen den beiden Kammern stattfindet. Dabei ist allerdings zu beachten, daß diese Ausführungsform aus zahlreichen Einzelteilen besteht, die einander in bestimmter Weise zugeordnet sind. Die Einzelteile an sich sind zwar vergleichsweise einfach herstellbar, jedoch ist die Montage des Gummilagers aufgrund der Vielzahl der Einzelteile aufwendig, kompliziert und in wirtschaftlicher Hinsicht wenig befriedigend.

Aus der älteren Anmeldung EP 0 490 717 A1 ist ein Gummilager bekannt, das die Merkmale aus dem Oberbegriff von Anspruch 1 des beanspruchten Gummilagers aufweist, wobei der Wandabschnitt und die Membran durch ein einstückig ineinander übergehendes Formteil gebildet sind und wobei an dem dem nachgiebigen Wandabschnitt entfernten Ende des Formteils dieses und die Trennwand flüssigkeitsdicht verbunden sind. Das Formteil weist im Bereich des Wandabschnittes einen mit einer Hinterschneidung versehenen Vorsprung auf und ist mit der Hinterschneidung in eine Durchbrechung der Trennwand eingeknüpft.

Der Erfindung liegt die Aufgabe zugrunde, ein Gummilager mit hydraulischer Dämpfung derart weiterzuentwickeln, daß es aus weniger, aneinander festzulegenden Einzelteilen besteht, in seiner Gesamtheit einen geringeren Fertigungs- und Montageaufwand erfordert und dadurch wirtschaftlicher herstellbar ist und gute Gebrauchseigenschaften über eine lange Gebrauchsdauer aufweist.

Diese Aufgabe wird erfindungsgemäß bei einem Gummilager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Gummilager mit hydraulischer Dämpfung ist es vorgesehen, daß der Wandabschnitt und die Membran durch ein einstückig ineinander übergehendes Formteil gebildet sind, daß an dem dem nachgiebigen Wandabschnitt entfernten Ende des Formteils dieses und die Trennwand flüssigkeitsdicht verbunden sind, daß das Formteil im Bereich des Wandabschnitts einen mit einer Hinterschneidung versehen Vorsprung aufweist und mit der Hinterschneidung in eine Durchbrechung der Trennwand eingeknüpft ist und daß zur weiteren Verbesserung der Isolierung hochfrequenter Schwingungen, die beispielsweise durch Unwuchten in Verbrennungskraftmaschinen angeregt werden, der Vorsprung mit einem Lagerspiel von der Durchbrechung umschlossen ist. Hierbei ist von Vorteil, daß das Gummilager einen einfachen Aufbau, bestehend aus Wenigen Einzelteilen, aufweist und dadurch einfach und kostengünstig herstellbar ist. Hierbei ist weiter von Vorteil, daß das Formteil und die Trennwand besonders einfach aneinander festlegbar sind. Sekundäre Befestigungsmittel werden nicht benötigt.

Eine im wesentlichen flüssigkeitsdichte Verbindung zwischen dem Formteil und der Trennwand kann beispielsweise durch einen Klemmring erfolgen, der die beiden Teile miteinander verpreßt und dichtend verbindet. Des weiteren besteht die Möglichkeit, daß der Klemmring am Formteil angeklebt oder aufvulkanisiert ist und dieses im montierten Zustand unter Vorspannung an der beispielsweise metallischen Trennwand anlegt. Zur flüssigkeitsdichten Festlegung von Formteil und Trennwand können die Durchbrechung der Trennwand und die Hinterschneidung im Formteil zusätzlich miteinander verklebt sein. Für besonders geräuscharmen Betrieb des Gummilagers während seiner bestimmungsgemäßen Verwendung können die Berührungsflächen von Trennwand und/oder Formteil mit einer Profilierung versehen sein. Das im Anspruch 1 genannte Lagerspiel befindet sich vorteilhafterweise in axialer Richtung beiderseits der Trennwand, in die die Hinterschneidung des Formteils eingeknüpft ist. Dadurch werden höherfrequente Schwingungen sowohl bei Zug- als auch bei Druckbelastungen auf das Gummilager wirkungsvoll isoliert. Die Größe des Lagerspiels bewegt sich vorzugsweise, je nach Anwendungsfall, im Bereich weniger Zehntel Millimeter, so daß nach wie vor von einer im wesentlichen flüssigkeitsdichten Verbindung zwischen Formteil und Trennwand ausgegangen werden kann.

Aufgrund der Ausgestaltung des Lagers ergibt sich während der bestimmungsgemäßen Verwendung eine Entkopplung von hochfrequenten und niederfrequenten Schwingungen. Höherfrequente Schwingungen werden derart isoliert, daß der nachgiebig ausgebildete Wandabschnitt, der einen Teil der Trennwand bildet, in axialer Richtung bewegbar ist. Ein Flüssigkeitsaustausch zwischen dem Arbeitsraum und dem Ausgleichsraum findet nicht statt. Zur Dämpfung niedrigfrequenter Schwingungen gerät die Dämpfungsflüssigkeit im Arbeits-und Ausgleichsraum, die über zumindest eine Verbindungsöffnung miteinander verbunden sind, in Resonanz. Durch dieses Verhalten werden beispielsweise fahrbahnerregte Schwingungen mit großen Amplituden wirkungsvoll gedämpft. In Abhängigkeit von den jeweiligen Gegebenheiten des Anwendungsfalles können die Verbindungsöffnungen direkt in der Trennwand zwischen Ausgleichs- und Arbeitsraum angeordnet sein oder die Verbindungsöffnung kann durch einen Drosselkanal von bestimmter Länge und bestimmtem Querschnitt gebildet sein.

Der Vorsprung kann mit einer einstückig ausgeformten Ventilzunge versehen sein, die eine Sekundärdurchbrechung der Trennwand auf einer Seite im wesentlichen dichtend überdeckt. Die Ventilzunge kann so angeordnet sein, daß sie in Zug- oder Druckrichtung des Gummilagers wirksam ist. Dies ist insbesondere dann sinnvoll, wenn die Zug- und Druckstufe des Gummilagers unterschiedlich ausgelegt sein müssen. So ergibt sich beispielsweise bei Anordnung der Ventilzunge in Richtung des Arbeitsraumes ein rascher Flüssigkeitsaustausch zwischen Ausgleichs- und Arbeitsraum bei Belastung des Gummilagers auf Zug.

Bei anschließender Druckbelastung erfolgt der Volumenaustausch durch die Öffnungen zwischen Arbeits- und Ausgleichsraum, was eine bessere Dämpfung bedingt.

Gemäß einer weiteren vorteilhaften Ausgestaltung kann die Ventilzunge in die Sekundärdurchbrechung einfederbar sein. Neben einem guten Druckabbau ergibt sich damit eine gute Zuordnung der montierten Teile zueinander sowie eine einfache Montage.

Zusätzlich kann die Ventilzunge im Bereich der Sekundärdurchbrechung mit einer Tertiärdurchbrechung versehen sein, wobei die Tertiärdurchbrechung einen kleineren Durchtrittsquerschnitt aufweisen kann als die Sekundärdurchbrechung. Auch diese Ausgestaltung bewirkt unterschiedliche Dämpfungscharakteristika bei Belastungen des Gummilagers auf Zug oder Druck.

Eine besonders einfache Ausgestaltung der Sekundärdurchbrechung kann dadurch gebildet sein, daß die Sekundärdurchbrechung durch eine ohne Werkstoffentnahme gebildete Durchtrennung, beispielsweise einen Schnitt, ausgeführt ist. Auch durch diese Ausgestaltung ist ein an sich nahezu unverändertes Gummilager für viele verschiedene Anwendungsbereiche einsetzbar. Allein durch die Ausbildung des einstückig ausgebildeten Formteiles und der darin angeordneten Tertiärdurchbrechung ergeben sich die unterschiedlichsten Dämpfungsverhalten. Der Austausch des Formteiles, ohne ansonsten Änderungen am Gummilager vorzunehmen, bedingt eine große Anwendbarkeit des Lagers. Durch die Ausgestaltung der Durchbrechungen und die Anordnung der Ventilzunge kann auch die Breitbandigkeit der Dämpfung/Isolierung verbessert werden.

Der Gegenstand der vorliegenden Erfindung wird nachfolgend anhand der Zeichnungen weiter erläutert. Diese zeigen beispielhaft verschiedene Ausgestaltungen des erfindungsgemäßen Gummilagers in teilweise schematischer Darstellung.

Es zeigen:

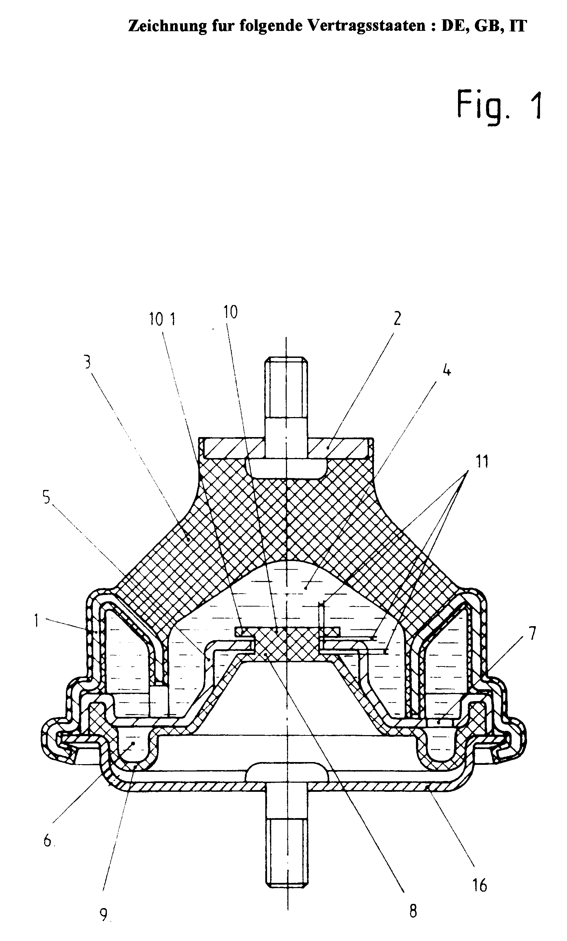

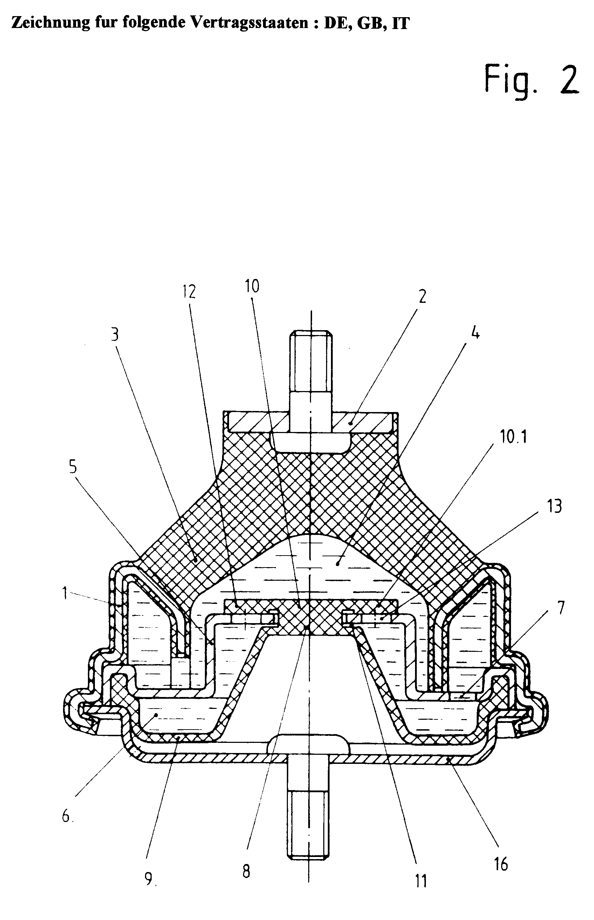

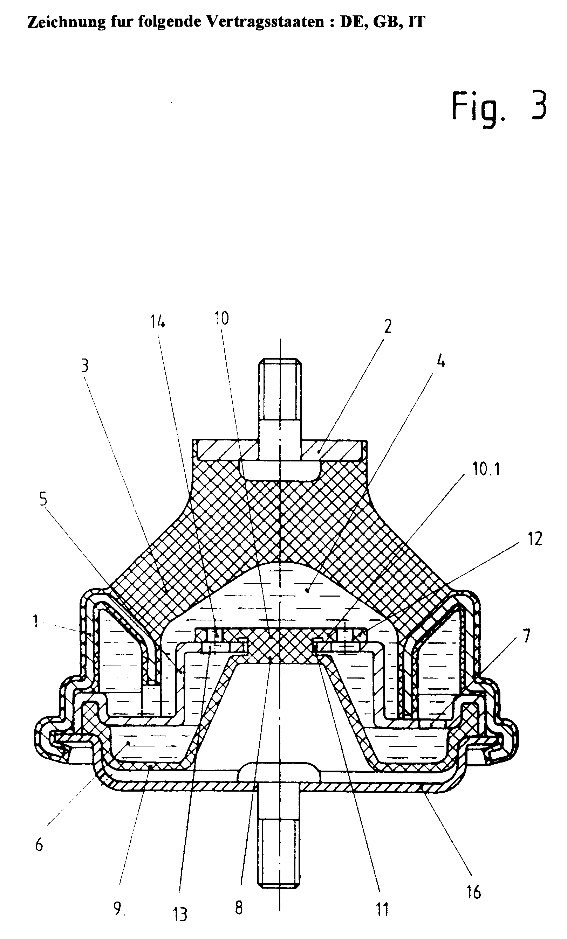

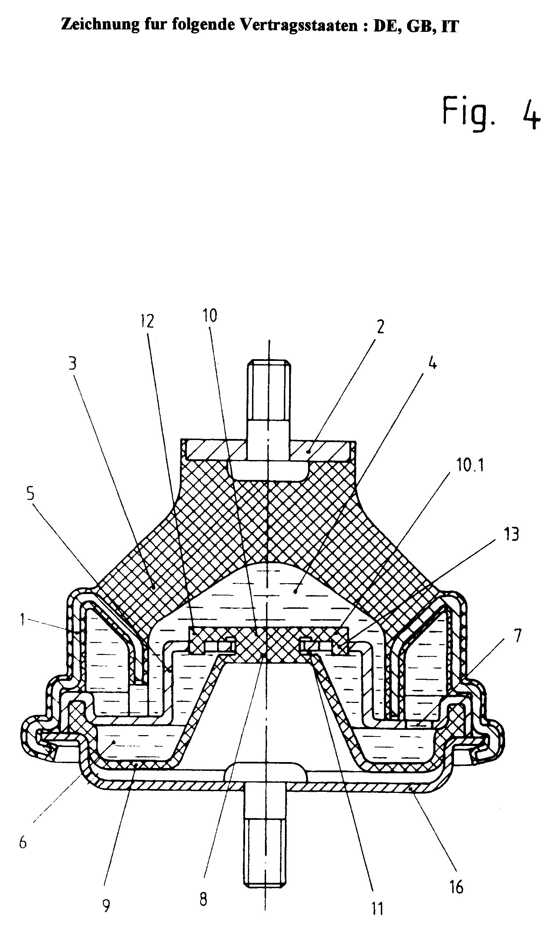

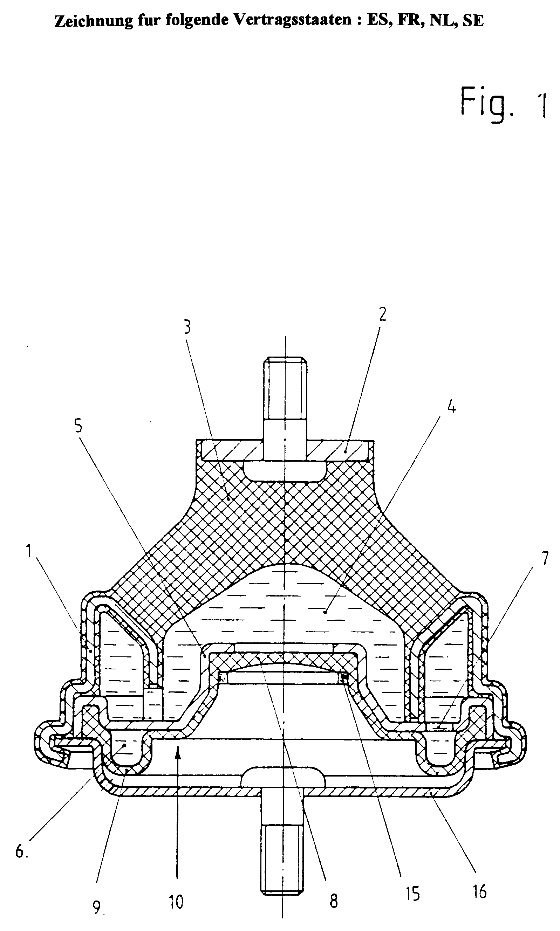

Die Figuren 1, 2, 3 und 4 jeweils ein erfindungsgemäßes Gummilager mit hydraulischer Dämpfung, umfassend ein Traglager 1 und ein Auflager 2, die durch ein hohlkegelig ausgebildetes Federelement 3 aus gummielastischem Werkstoff verbunden sind.

Abweichend hiervon ist es jedoch problemlos möglich, die in der vorliegenden Erfindung offenbarte Lehre zum technischen Handel auch auf andere Ausführungen zu übertragen. In diesen Beispielen ist der flüssigkeitsgefüllte Arbeitsraum 4 durch eine Trennwand 5, die am Traglager 1 festgelegt ist, vom Ausgleichsraum 6 getrennt. Die Trennwand zwischen dem Arbeitsraum 4 und dem Ausgleichsraum 6 ist von einer Verbindungsöffnung 7 durchdrungen, die den Arbeitsraum 4 mit dem Ausgleichsraum 6 verbindet. Das Traglager 1 ist so ausgestaltet, daß durch dieses ein Drosselkanal gebildet wird, der zur Dämpfung niedrigfrequenter Schwingungen benötigt wird. Die Kanallänge und der Kanalquerschnitt können den jeweiligen Gegebenheiten des Anwendungsfalles angepaßt werden. Ein Teilbereich der Trennwand 5 ist durch einen nachgiebigen Wandabschnitt 8 gebildet, der die Entkopplung von hoch- und niederfrequenten Schwingungen bewirkt. Der Ausgleichsraum 6 ist durch eine Membran 9, die am Traglager 1 festgelegt ist, nach außen abgeschlossen. Der nachgiebige Wandabschnitt 8 und die Membran 9 sind einstückig ineinander übergehend ausgebildet und bilden gemeinsam das Formteil 10. Das Formteil 10 kann beispielsweise auch eine Armierung enthalten, wodurch die Gebrauchsdauer weiter verbessert wird. Die Gefahr einer Beschädigung des Formteiles ist dadurch weiter reduziert. Das Formteil 10 liegt im wesentlichen flüssigkeitsdicht an der Trennwand 5 an, wodurch ein direkter Flüssigkeitsaustausch zwischen Arbeitsraum 4 und Ausgleichsraum 6 verhindert wird.

Das in Figur 1 dargestellte Gummilager zeigt ein Formteil 10, das im Bereich der Durchbrechung von Trennwand 5 mit einem Vorsprung 10.1 und einer Hinterschneidung versehen ist, wobei die Hinterschneidung in die Durchbrechung der Trennwand 5 eingeknüpft ist. Ein separates Befestigungsteil zur Befestigung des Formteiles 10 an der Trennwand 5 ist nicht nötig, wodurch die Montage des Gummilagers weiter vereinfacht wird. Des weiteren ist der Vorsprung 10.1 mit einem Lagerspiel 11 von der Durchbrechung der Trennwand 5 umschlossen. Dadurch wird eine verbesserte Isolierung höherfrequenter Schwingungen bedingt. Das Lagerspiel 11 beträgt nur wenige Zehntel Millimeter, so daß ein direkter Flüssigkeitsaustausch zwischen Arbeitsraum 4 und Ausgleichsraum 6 vernachlässigbar klein ist. Zur absolut flüssigkeitsdichten Verbindung zwischen Formteil 10 und Trennwand 5 besteht die Möglichkeit, diese beiden Teile in einem Bereich, der zur Schwingungsisolierung/Schwingungsdämpfung wenig beiträgt, beispielsweise durch einen Klemmring oder eine Klebeverbindung aneinander festzulegen.

Nach einer anderen, hier nicht dargestellten Ausführungsform kann innerhalb des nachgiebigen Wandabschnittes 8 eine zusätzliche Masse angeordnet sein, die das Schwingungsverhalten des Wandabschnittes 8 in axialer Richtung beeinflußt. Weitere hydraulische Effekte, wie beispielsweise das Absenken der dynamischen Federrate, können durch verschiedenartig ausgestaltete Wandabschnitte bewirkt werden. Beispielsweise kann der Wandabschnitt 8 einen einstückig mit dem Formteil 10 ausgebildeten, topfförmigen Raum in Richtung des Arbeitsraumes 4 begrenzen, der während der bestimmungsgemäßen Verwendung des Gummilagers flüssigkeitsgefüllt ist. Dieser topfförmige Raum ist zu seiner Umgebung hin flüssigkeitsdicht abgeschlossen; ein Flüssigkeitsaustausch mit Arbeits- oder Ausgleichsraum 4, 6 findet nicht statt.

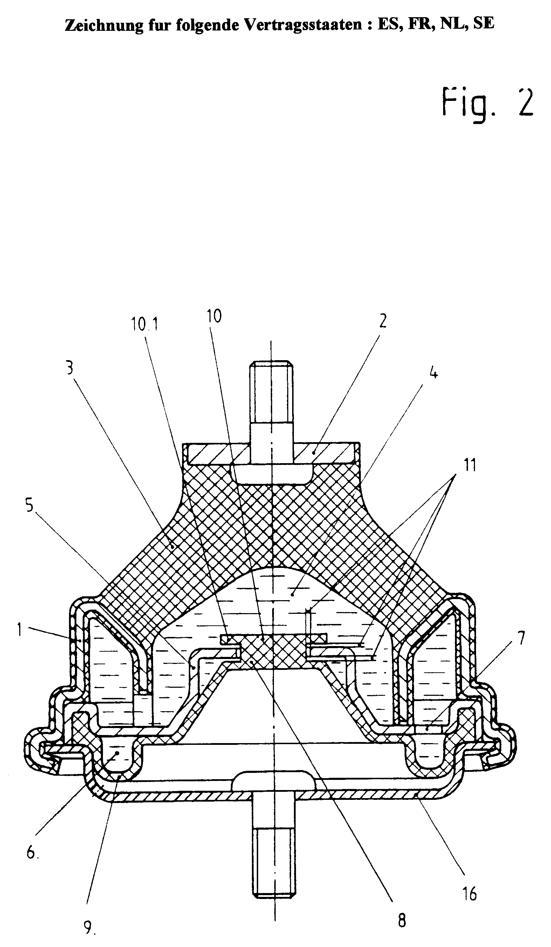

Figur 2 entspricht im wesentlichen dem Gummilager aus Figur 1, wobei die Trennwand 5 den Arbeitsraum 4 und den Ausgleichsraum 6 durch eine Verbindungsöffnung 7 und beispielsweise zwei Sekundärdurchbrechungen 13 miteinander verbindet. An den Vorsprung 10.1 des Formteiles 10 sind einstückig Ventilzungen 12 angeformt, die die Sekundärdurchbrechungen 13 der Trennwand 5 in axialer Richtung einseitig, dichtend überdecken. Der Vorteil dieser Anordnung besteht darin, daß das Lager in Zug- und Druckrichtung unterschiedliche Dämpfungs- bzw. Isoliereigenschaften aufweist. Bei Druckbelastung des Lagers, ausgehend vom Arbeitsraum 4, bewegt sich die Dämpfungsflüssigkeit zur Dämpfung niedrigfrequenter Schwingungen über den Drosselkanal, der durch das Traglager 1 gebildet ist, durch die Verbindungsöffnung 7 in den Ausgleichsraum 6. Bei anschließender Belastung des Gummilagers auf Zug bewegt sich die Dämpfungsflüssigkeit nun wesentlich zügiger teilweise durch die Sekundärdurchbrechungen 13, teilweise durch die Verbindungsöffnung 7 vom Ausgleichsraum 6 in den Arbeitsraum 4 zurück. Dieses Verhalten bedingt ein rasches Nachgeben des Gummilagers auf Zugbelastungen und eine größere Steifigkeit des Lagers bei auftretenden Druckbelastungen.

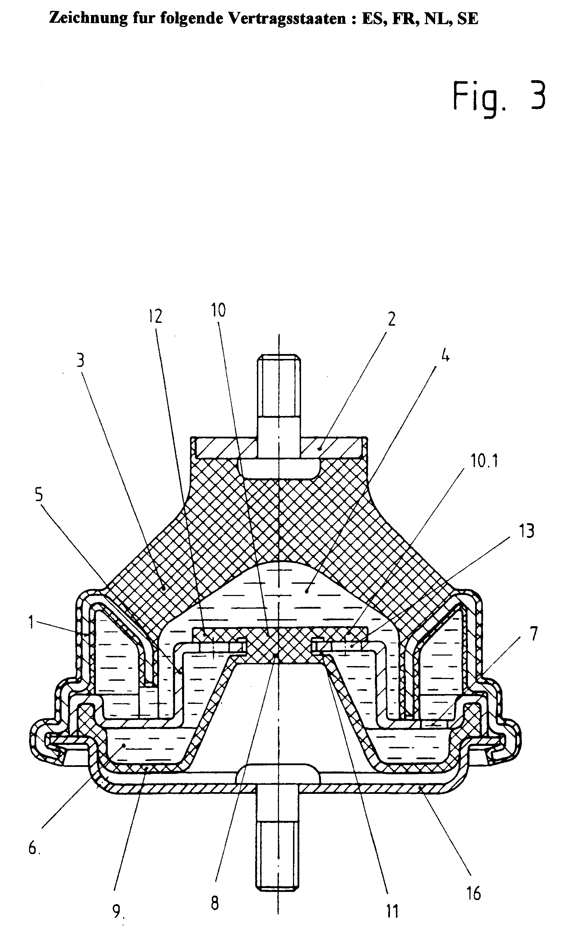

Das in Figur 3 dargestellte Lager unterscheidet sich von dem in Figur 2 dargestellten Lager dadurch, daß in der Ventilzunge 12 im Bereich der Sekundärdurchbrechungen 13 der Tennwand 5 Tertiärdurchbrechungen 14 angeordnet sind, die in diesem Fall einen kleineren Durchtrittsquerscnitt aufweisen, als die Sekundärdurchbrechungen 13. In Abhängigkeit von der Größe des Durchtrittsquerschnittes von Sekundärdurchbrechungen 13 und Tertiärdurchbrechungen 14 sind bestimmte Gebrauchseigenschaften des Gummilagers herbeizuführen.

Das hier dargestellte Gummilager weist im Prinzip ein ähnliches Verhalten wie das Lager aus Figur 2 auf, wobei Druckbelastungen auf das Lager weniger stark gedämpft werden, als in Figur 2 beschrieben. Dieses Gummilager zeichnet sich, wie auch das in Figur 2 dargestellte Gummilager durch eine breitbandige Dämpfung mit ausgezeichneten Dämpfungs- und Isoliereigenschaften aus.

Die in den Figuren 1 bis 3 dargestellten Gummilager können im Bereich ihrer Hinterschneidungen Anschlagpuffer aufweisen, die ein hartes Anschlagen von Trennwand 5 und Formteil 10 aneinander verhindern. Diese Ausgestaltung bedingt, wenn dies beispielsweise aus Komfortgründen erforderlich sein sollte, ein besonders geräuscharmes Betriebsverhalten des erfindungsgemäßen Gummilagers.

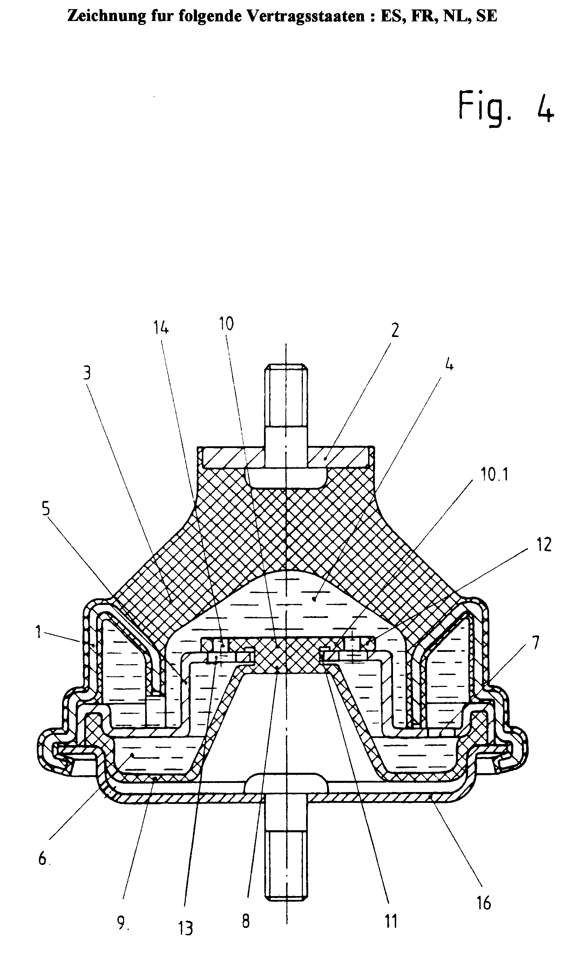

In Figur 4 ist das Gummilager ähnlich dem Lager aus Figur 2 ausgeführt wobei die Ventilzunge 12 in die Sekundärdurchbrechung 13 eingefedert ist.

### Beschreibung für folgende Vertragsstaaten : ES, FR, NL, SE

Die Erfindung betrifft ein Gummilager mit hydraulischer Dämpfung, umfassend ein Trag- und ein Auflager, die durch ein Federelement aus gummielastischem Werkstoff verbunden sind und einen flüssigkeitsgefüllten Arbeitsraum umschließen, der durch eine an dem Traglager festgelegte Trennwand von einem Ausgleichsraum getrennt ist, wobei die Trennwand von zumindest einer Verbindungsöffnung durchdrungen und in einem Teilbereich durch einen nachgiebigen Wandabschnitt gebildet ist, wobei der Ausgleichsraum durch eine an dem Traglager festgelegte Membran nach außen abgeschlossen ist.

Ein solches Gummilager ist aus der DE-PS 27 27 244, Figur 13 und 14, bekannt. Das Gummilager ist so ausgebildet, daß zumindest ein Teil der Trennwand in axialer Richtung durch Anschläge begrenzt, aber beweglich angeordnet ist. Zur Dämpfung großer Schwingungsamplituden tritt die Dämpfungsflüssigkeit durch Dämpfungsöffnungen hindurch. Kleine Schwingungsamplituden werden durch die in axialer Richtung bewegliche Trennwand isoliert, ohne daß ein Austausch der Flüssigkeit durch die Kalibrierbohrungen hindurch zwischen den beiden Kammern stattfindet. Dabei ist allerdings zu beachten, daß diese Ausführungsform aus zahlreichen Einzelteilen besteht, die einander in bestimmter Weise zugeordnet sind. Die Einzelteile an sich sind zwar vergleichsweise einfach herstellbar, jedoch ist die Montage des Gummilagers aufgrund der Vielzahl der Einzelteile aufwendig, kompliziert und in wirtschaftlicher Hinsicht wenig befriedigend.

Der Erfindung liegt die Aufgabe zugrunde, ein Gummilager mit hydraulischer Dämpfung derart weiterzuentwickeln, daß es aus weniger, aneinander festzulegenden Einzelteilen besteht, in seiner Gesamtheit einen geringeren Fertigungs- und Montageaufwand erfordert und dadurch wirtschaftlicher herstellbar ist und gute Gebrauchseigenschaften über eine lange Gebrauchsdauer aufweist.

Diese Aufgabe wird erfindungsgemäß bei einem Gummilager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Gummilager mit hydraulischer Dämpfung ist es vorgesehen, daß der Wandabschnitt und die Membran durch ein einstückig ineinander übergehendes Formteil gebildet sind und daß an dem dem nachgiebigen Wandabschnitt entfernten Ende des Formteils dieses und die Trennwand flüssigkeitsdicht verbunden sind. Hierbei ist von Vorteil, daß das Gummilager einen einfachen Aufbau, bestehend aus wenigen Einzelteilen, aufweist und dadurch einfach und kostengünstig herstellbar ist. Die im wesentlichen flüssigkeitsdichte Verbindung zwischen dem Formteil und der Trennwand kann beispielsweise durch einen Klemmring erfolgen, der die beiden Teile miteinander verpreßt und dichtend verbindet. Des weiteren besteht die Möglichkeit, daß der Klemmring am Formteil angeklebt oder aufvulkanisiert ist und dieses im montierten Zustand unter Vorspannung an der beispielsweise metallischen Trennwand anlegt.

Zur Funktion des Gummilagers ist folgendes auszuführen:
Aufgrund der Ausgestaltung des Lagers ergibt sich während der bestimmungsgemäßen Verwendung eine Entkopplung von hochfrequenten und niederfrequenten Schwingungen. Höherfrequente Schwingungen werden derart isoliert, daß der nachgiebig ausgebildete Wandabschnitt, der einen Teil der Trennwand bildet, in axialer Richtung bewegbar ist. Ein Flüssigkeitsaustausch zwischen dem Arbeitsraum und dem Ausgleichsraum findet nicht statt. Zur Dämpfung niedrigfrequenter Schwingungen gerät die Dämpfungsflüssigkeit im Arbeits-und Ausgleichsraum, die über zumindest eine Verbindungsöffnung miteinander verbunden sind, in Resonanz. Durch dieses Verhalten werden beispielsweise fahrbahnerregte Schwingungen mit großen Amplituden wirkungsvoll gedämpft. In Abhängigkeit von den jeweiligen Gegebenheiten des Anwendungsfalles können die Verbindungsöffnungen direkt in der Trennwand zwischen Ausgleichs- und Arbeitsraum angeordnet sein oder die Verbindungsöffnung kann durch einen Drosselkanal von bestimmter Länge und bestimmtem Querschnitt gebildet sein.

Gemäß einer vorteilhaften Ausgestaltung ist es vorgesehen, daß das Formteil im Bereich des Wandabschnittes einen mit einer Hinterschneidung versehenen Vorsprung aufweisen kann und mit der Hinterschneidung in eine Durchbrechung der Trennwand eingeknüpft ist. Der Vorsprung kann mit einem Lagerspiel von der Durchbrechung umschlossen sein. Hierbei ist von Vorteil, daß das Formteil und die Trennwand besonders einfach aneinander festlegbar sind. Sekundäre Befestigungsmittel werden nicht benötigt.

Zur flüssigkeitsdichten Festlegung von Formteil und Trennwand können die Durchbrechung der Trennwand und die Hinterschneidung im Formteil zusätzlich miteinander verklebt sein. Für besonders geräuscharmen Betrieb des Gummilagers während seiner bestimmungsgemäßen Verwendung können die Berührungsflächen von Trennwand und/oder Formteil mit einer Profilierung versehen sein. Zur weiteren Verbesserung der Isolierung hochfrequenter Schwingungen, die beispielsweise durch Unwuchten in Verbrennungskraftmaschinen angeregt werden, kann ein Lagerspiel zwischen der Hinterschneidung mit dem Vorsprung und der Durchbrechung vorgesehen sein. Das Lagerspiel befindet sich vorteilhafterweise in axialer Richtung beiderseits der Trennwand, in die die Hinterschneidung des Formteils eingeknüpft ist. Dadurch werden höherfrequente Schwingungen sowohl bei Zug- als auch bei Druckbelastungen auf das Gummilager wirkungsvoll isoliert. Die Größe des Lagerspiels bewegt sich vorzugsweise, je nach Anwendungsfall, im Bereich weniger Zehntel Millimeter, so daß nach wie vor von einer im wesentlichen flüssigkeitsdichten Verbindung zwischen Formteil und Trennwand ausgegangen werden kann.

Der Vorsprung kann mit einer einstückig ausgeformten Ventilzunge versehen sein, die eine Sekundärdurchbrechung der Trennwand auf einer Seite im wesentlichen dichtend überdeckt. Die Ventilzunge kann so angeordnet sein, daß sie in Zug- oder Druckrichtung des Gummilagers wirksam ist. Dies ist insbesondere dann sinnvoll, wenn die Zug- und Druckstufe des Gummilagers unterschiedlich ausgelegt sein müssen. So ergibt sich beispielsweise bei Anordnung der Ventilzunge in Richtung des Arbeitsraumes ein rascher Flüssigkeitsaustausch zwischen Ausgleichs- und Arbeitsraum bei Belastung des Gummilagers auf Zug.

Bei anschließender Druckbelastung erfolgt der Volumenaustausch durch die Öffnungen zwischen Arbeits- und Ausgleichsraum, was eine bessere Dämpfung bedingt.

Gemäß einer weiteren vorteilhaften Ausgestaltung kann die Ventilzunge in die Sekundärdurchbrechung einfederbar sein. Neben einem guten Druckabbau ergibt sich damit eine gute Zuordnung der montierten Teile zueinander sowie eine einfache Montage.

Zusätzlich kann die Ventilzunge im Bereich der Sekundärdurchbrechung mit einer Tertiärdurchbrechung versehen sein, wobei die Tertiärdurchbrechung einen kleineren Durchtrittsquerschnitt aufweisen kann als die Sekundärdurchbrechung. Auch diese Ausgestaltung bewirkt unterschiedliche Dämpfungscharakteristika bei Belastungen des Gummilagers auf Zug oder Druck.

Eine besonders einfache Ausgestaltung der Sekundärdurchbrechung kann dadurch gebildet sein, daß die Sekundärdurchbrechung durch eine ohne Werkstoffentnahme gebildete Durchtrennung, beispielsweise einen Schnitt, ausgeführt ist. Auch durch diese Ausgestaltung ist ein an sich nahezu unverändertes Gummilager für viele verschiedene Anwendungsbereiche einsetzbar. Allein durch die Ausbildung des einstückig ausgebildeten Formteiles und der darin angeordneten Tertiärdurchbrechung ergeben sich die unterschiedlichsten Dämpfungsverhalten. Der Austausch des Formteiles, ohne ansonsten Änderungen am Gummilager vorzunehmen, bedingt eine große Anwendbarkeit des Lagers. Durch die Ausgestaltung der Durchbrechungen und die Anordnung der Ventilzunge kann auch die Breitbandigkeit der Dämpfung/Isolierung verbessert werden.

Der Gegenstand der vorliegenden Erfindung wird nachfolgend anhand der Zeichnungen weiter erläutert. Diese zeigen beispielhaft verschiedene Ausgestaltungen des erfindungsgemäßen Gummilagers in teilweise schematischer Darstellung.

Es zeigen:

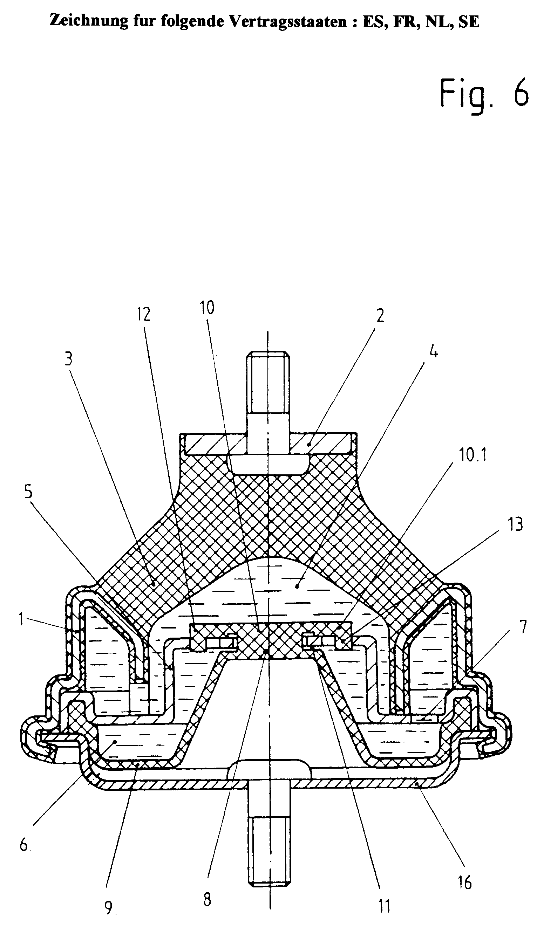

Die Figuren 1, 2, 3, 4, 5 und 6 jeweils ein erfindungsgemäßes Gummilager mit hydraulischer Dämpfung, umfassend ein Traglager 1 und ein Auflager 2, die durch ein hohlkegelig ausgebildetes Federelement 3 aus gummielastischem Werkstoff verbunden sind. Abweichend hiervon ist es jedoch problemlos möglich, die in der vorliegenden Erfindung offenbarte Lehre zum technischen Handel auch auf andere Ausführungen zu übertragen. In diesen Beispielen ist der flüssigkeitsgefüllte Arbeitsraum 4 durch eine Trennwand 5, die am Traglager 1 festgelegt ist, vom Ausgleichsraum 6 getrennt. Die Trennwand zwischen dem Arbeitsraum 4 und dem Ausgleichsraum 6 ist von einer Verbindungsöffnung 7 durchdrungen, die den Arbeitsraum 4 mit dem Ausgleichsraum 6 verbindet. Das Traglager 1 ist so ausgestaltet, daß durch dieses ein Drosselkanal gebildet wird, der zur Dämpfung niedrigfrequenter Schwingungen benötigt wird. Die Kanallänge und der Kanalquerschnitt können den jeweiligen Gegebenheiten des Anwendungsfalles angepaßt werden. Ein Teilbereich der Trennwand 5 ist durch einen nachgiebigen Wandabschnitt 8 gebildet, der die Entkopplung von hoch-und niederfrequenten Schwingungen bewirkt. Der Ausgleichsraum 6 ist durch eine Membran 9, die am Traglager 1 festgelegt ist, nach außen abgeschlossen. Der nachgiebige Wandabschnitt 8 und die Membran 9 sind einstückig ineinander übergehend ausgebildet und bilden gemeinsam das Formteil 10. Das Formteil 10 kann beispielsweise auch eine Armierung enthalten, wodurch die Gebrauchsdauer weiter verbessert wird. Die Gefahr einer Beschädigung des Formteiles ist dadurch weiter reduziert. Das Formteil 10 liegt im wesentlichen flüssigkeitsdicht an der Trennwand 5 an, wodurch ein direkter Flüssigkeitsaustausch zwischen Arbeitsraum 4 und Ausgleichsraum 6 verhindert wird.

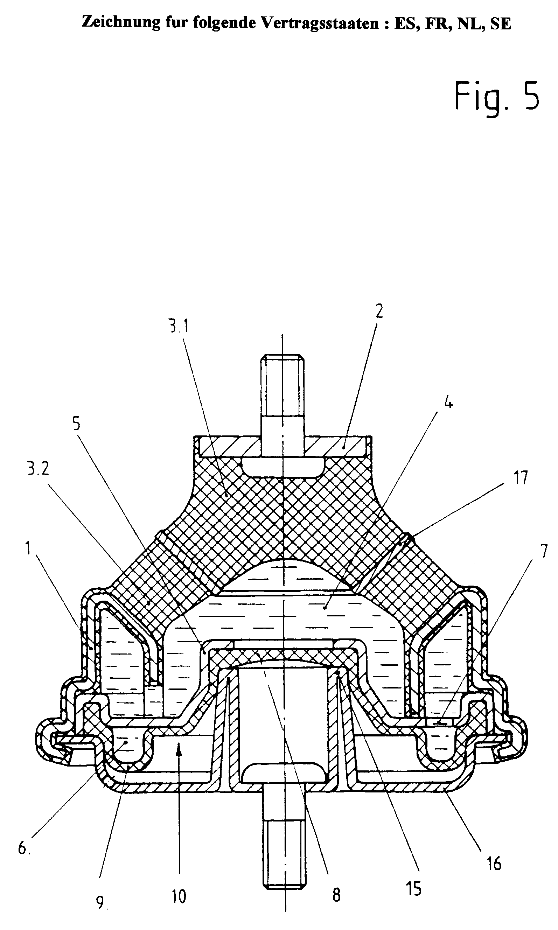

Das Gummilager in Figur 1 weist einen Klemmring 15 auf, der das durch die Membran 9 und den Wandabschnitt 8 gebildete Formteil 10 mit der Trennwand 5 dichtend verpreßt. Der Klemmring 15 kann bedarfsweise auch durch eine Einwölbung des Bodenteils 16 ersetzt sein, ähnlich wie in Figur 5 dargestellt. Nach einer anderen, hier nicht dargestellten Ausführungsform kann innerhalb des nachgiebigen Wandabschnittes 8 eine zusätzliche Masse angeordnet sein, die das Schwingungsverhalten des Wandabschnittes 8 in axialer Richtung beeinflußt. Weitere hydraulische Effekte, wie beispielsweise das Absenken der dynamischen Federrate, können durch verschiedenartig ausgestaltete Wandabschnitte bewirkt werden. Beispielsweise kann der Wandabschnitt 8 einen einstückig mit dem Formteil 10 ausgebildeten, topfförmigen Raum in Richtung des Arbeitsraumes 4 begrenzen, der während der bestimmungsgemäßen Verwendung des Gummilagers flüssigkeitsgefüllt ist. Dieser topfförmige Raum ist zu seiner Umgebung hin flüssigkeitsdicht abgeschlossen; ein Flüssigkeitsaustausch mit Arbeits- oder Ausgleichsraum 4, 6 findet nicht statt.

Ein Flüssigkeitsaustausch während der bestimmungsgemäßen Verwendung des Gummilagers erfolgt ausschließlich, beispielsweise vom Arbeitsraum 4 ausgehend, über den Drosselkanal, der durch das Traglager 1 gebildet ist und die Verbindungsöffnung 7 in den Ausgleichsraum 6. Die Dämpfungs- und Isoliereigenschaften sind bei Zug- und Druckbelastungen des Gummilagers gleich.

Das in Figur 2 dargestellte Gummilager unterscheidet sich im wesentlichen durch eine andere Festlegung des Formteiles 10 an der Trennwand 5 von dem Lager, das in Figur 1 dargestellt ist. Das Formteil 10 in Figur 2 ist im Bereich der Durchbrechung von Trennwand 5 mit einem Vorsprung 10.1 und einer Hinterschneidung versehen, wobei die Hinterschneidung in die Durchbrechung der Trennwand 5 eingeknüpft ist. Ein separates Befestigungsteil zur Befestigung des Formteiles 10 an der Trennwand 5 ist nicht nötig, wodurch die Montage des Gummilagers weiter vereinfacht wird. Des weiteren ist der Vorsprung 10.1 mit einem Lagerspiel 11 von der Durchbrechung der Trennwand 5 umschlossen. Dadurch wird eine verbesserte Isolierung höherfrequenter Schwingungen bedingt. Das Lagerspiel 11 beträgt nur wenige Zehntel Millimeter, so daß ein direkter Flüssigkeitsaustausch zwischen Arbeitsraum 4 und Ausgleichsraum 6 vernachlässigbar klein ist. Zur absolut flüssigkeitsdichten Verbindung zwischen Formteil 10 und Trennwand 5 besteht die Möglichkeit, diese beiden Teile in einem Bereich, der zur Schwingungsisolierung/Schwingungsdämpfung wenig beiträgt, beispielsweise durch einen Klemmring oder eine Klebeverbindung aneinander festzulegen.

Figur 3 entspricht im wesentlichen den Gummilagern aus den Figuren 1 und 2, wobei die Trennwand 5 den Arbeitsraum 4 und den Ausgleichsraum 6 durch eine Verbindungsöffnung 7 und beispielsweise zwei Sekundärdurchbrechungen 13 miteinander verbindet. An den Vorsprung 10.1 des Formteiles 10 sind einstückig Ventilzungen 12 angeformt, die die Sekundärdurchbrechungen 13 der Trennwand 5 in axialer Richtung einseitig, dichtend überdecken. Der Vorteil dieser Anordnung besteht darin, daß das Lager in Zug- und Druckrichtung unterschiedliche Dämpfungs- bzw. Isoliereigenschaften aufweist. Bei Druckbelastung des Lagers, ausgehend vom Arbeitsraum 4, bewegt sich die Dämpfungsflüssigkeit zur Dämpfung niedrigfrequenter Schwingungen über den Drosselkanal, der durch das Traglager 1 gebildet ist, durch die Verbindungsöffnung 7 in den Ausgleichsraum 6. Bei anschließender Belastung des Gummilagers auf Zug bewegt sich die Dämpfungsflüssigkeit nun wesentlich zügiger teilweise durch die Sekundärdurchbrechungen 13, teilweise durch die Verbindungsöffnung 7 vom Ausgleichsraum 6 in den Arbeitsraum 4 zurück. Dieses Verhalten bedingt ein rasches Nachgeben des Gummilagers auf Zugbelastungen und eine größere Steifigkeit des Lagers bei auftretenden Druckbelastungen.

Das in Figur 4 dargestellte Lager unterscheidet sich von dem in Figur 3 dargestellten Lager dadurch, daß in der Ventilzunge 12 im Bereich der Sekundärdurchbrechungen 13 der Tennwand 5 Tertiärdurchbrechungen 14 angeordnet sind, die in diesem Fall einen kleineren Durchtrittsquerscnitt aufweisen, als die Sekundärdurchbrechungen 13. In Abhängigkeit von der Größe des Durchtrittsquerschnittes von Sekundärdurchbrechungen 13 und Tertiärdurchbrechungen 14 sind bestimmte Gebrauchseigenschaften des Gummilagers herbeizuführen.

Das hier dargestellte Gummilager weist im Prinzip ein ähnliches Verhalten wie das Lager aus Figur 3 auf, wobei Druckbelastungen auf das Lager weniger stark gedämpft werden, als in Figur 3 beschrieben. Dieses Gummilager zeichnet sich, wie auch das in Figur 3 dargestellte Gummilager durch eine breitbandige Dämpfung mit ausgezeichneten Dämpfungs- und Isoliereigenschaften aus.

Die in den Figuren 2 bis 4 dargestellten Gummilager können im Bereich ihrer Hinterschneidungen Anschlagpuffer aufweisen, die ein hartes Anschlagen von Trennwand 5 und Formteil 10 aneinander verhindern. Diese Ausgestaltung bedingt, wenn dies beispielsweise aus Komfortgründen erforderlich sein sollte, ein besonders geräuscharmes Betriebsverhalten des erfindungsgemäßen Gummilagers.

In Figur 5 ist ein erfindungsgemäßes Lager dargestellt, bei dem der Klemmring 15 durch eine Einwölbung des Bodenteiles 16 gebildet ist. Außerdem ist das Federelement 3 durch einen metallischen Zwischenring 17 in Federteilkörper 3.1, 3.2 unterteilt. Hierbei ist von Vorteil, daß die Federteilkörper 3.1., 3.2 aus unterschiedlichem Material bestehen können und daher unterschiedliche Federraten aufweisen was in bestimmten Anwendungsfällen von Vorteil ist.

In Figur 6 ist das Gummilager ähnlich dem Lager aus Figur 3 ausgeführt wobei die Ventilzunge 12 in die Sekundärdurchbrechung 13 eingefedert ist.

## Patentansprüche (Patentansprüche für folgende(n) Vertragsstaat(en): DE, GB, IT)

1. Gummilager mit hydraulischer Dämpfung, umfassend ein Trag- (1) und ein Auflager (2), die durch ein Federelement (3) aus gummielastischem Werkstoff verbunden sind und einen flüssigkeitsgefüllten Arbeitsraum (4) umschließen, der durch eine an dem Traglager (1) festgelegte Trennwand (5) von einem Ausgleichsraum (6) getrennt ist, wobei die Trennwand (5) von zumindest einer Verbindungsöffnung (7) durchdrungen und in einem Teilbereich durch einen nachgiebigen Wandabschnitt (8) gebildet ist, wobei der Ausgleichsraum (6) durch eine an dem Traglager (1) festgelegte Membran (9) nach außen abgeschlossen ist, dadurch gekennzeichnet, daß der Wandabschnitt (8) und die Membran (9) durch ein einstückig ineinander übergehendes Formteil (10) gebildet sind und das an dem dem nachgiebigen Wandabschnitt (8) entfernten Ende des Formteils (10) dieses und die Trennwand (5) flüssigkeitsdicht verbunden sind, daß das Formteil (10) im Bereich des Wandabschnittes (8) einen mit einer Hinterschneidung versehenen Vorsprung (10.1) aufweist und mit der Hinterschneidung in eine Durchbrechung der Trennwand (5) eingeknüpft ist und daß der Vorsprung (10.1) mit einem Lagerspiel (11) von der Durchbrechung umschlossen ist.

2. Gummilager nach Anspruch 1, dadurch gekennzeichnet, daß der Vorsprung (10.1) mit einer einstückig angeformten Ventilzunge (12) versehen ist und daß die Ventilzunge (12) eine Sekundärdurchbrechung (13) der Trennwand (5) auf einer Seite im wesentlichen dichtend überdeckt.

3. Gummilager nach Anspruch 2, dadurch gekennzeichnet, daß die Ventilzunge (12) in die Sekundärdurchbrechung (13) einfederbar ist.

4. Gummilager nach Anspruch 2 bis 3, dadurch gekennzeichnet, daß die Ventilzunge (12) im Bereich der Sekundärdurchbrechung (13)mit einer Tertiärdurchbrechung (14) versehen ist und daß die Tertiärdurchbrechung (14) einen kleineren Durchtrittsquerschnitt aufweist als die Sekundärdurchbrechung (13).

5. Gummilager nach Anspruch 2 bis 4, dadurch gekennzeichnet, daß die Sekundärdurchbrechung (13) durch eine ohne Werkstoffentnahme gebildete Durchtrennung ausgeführt ist.

6. Gummilager nach Anspruch 1 bis 5, dadurch gekennzeichnet, daß das Formteil (10) und die Trennwand (5) in der übergangszone von voneinander noch getrennten Wandabschnitt (8) und Membran (9) zu deren einstückigen Ausbildung durch einen Klemmring (15) verpreßt und dichtend verbunden sind.

## Patentansprüche (Patentansprüche für folgende(n) Vertragsstaat(en): ES, FR, NL, SE)

1. Gummilager mit hydraulischer Dämpfung, umfassend ein Trag- (1) und ein Auflager (2), die durch ein Federelement (3) aus gummielastischem Werkstoff verbunden sind und einen flüssigkeitsgefüllten Arbeitsraum (4) umschließen, der durch eine an dem Traglager (1) festgelegte Trennwand (5) von einem Ausgleichsraum (6) getrennt ist, wobei die Trennwand (5) von zumindest einer Verbindungsöffnung (7) durchdrungen und in einem Teilbereich durch einen nachgiebigen Wandabschnitt (8) gebildet ist, wobei der Ausgleichsraum (6) durch eine an dem Traglager (1) festgelegte Membran (9) nach außen abgeschlossen ist, dadurch gekennzeichnet, daß der Wandabschnitt (8) und die Membran (9) durch ein einstückig ineinander übergehendes Formteil (10) gebildet sind und daß an dem dem nachgiebigen Wandabschnitt (8) entfernten Ende des Formteils (10) dieses und die Trennwand (5) flüssigkeitsdicht verbunden sind.

2. Gummilager nach Anspruch 1, dadurch gekennzeichnet, daß das Formteil (10) im Bereich des Wandabschnittes (8) einen mit einer Hinterschneidung versehenen Vorsprung (10.1) aufweist und mit der Hinterschneidung in eine Durchbrechung der Trennwand (5) eingeknüpft ist.

3. Gummilager nach Anspruch 2, dadurch gekennzeichnet, daß der Vorsprung (10.1) mit einem Lagerspiel (11) von der Durchbrechung umschlossen ist.

4. Gummilager nach Anspruch 2 oder 3, dadurch gekennzeichnet, daß der Vorsprung (10.1) mit einer einstückig angeformten Ventilzunge (12) versehen ist und daß die Ventilzunge (12) eine Sekundärdurchbrechung (13) der Trennwand (5) auf einer Seite im wesentlichen dichtend überdeckt.

5. Gummilager nach Anspruch 4, dadurch gekennzeichnet, daß die Ventilzunge (12) in die Sekundärdurchbrechung (13) einfederbar ist.

6. Gummilager nach Anspruch 4 bis 5, dadurch gekennzeichnet, daß die Ventilzunge (12) im Bereich der Sekundärdurchbrechung (13)mit einer Tertiärdurchbrechung (14) versehen ist und daß die Tertiärdurchbrechung (14) einen kleineren Durchtrittsquerschnitt aufweist als die Sekundärdurchbrechung (13).

7. Gummilager nach Anspruch 4 bis 6, dadurch gekennzeichnet, daß die Sekundärdurchbrechung (13) durch eine ohne Werkstoffentnahme gebildete Durchtrennung ausgeführt ist.

8. Gummilager nach Anspruch 1 bis 7, dadurch gekennzeichnet, daß das Formteil (10) und die Trennwand (5) in der übergangszone von voneinander noch getrennten Wandabschnitt (8) und Membran (9) zu deren einstückigen Ausbildung durch einen Klemmring (15) verpreßt und dichtend verbunden sind.

## Claims (Claims for the following Contracting State(s): DE, GB, IT)

1. A rubber mount having hydraulic damping, comprising a bearing mount (1) and a support (2) which are connected by a spring element (3) made of rubber-elastic material and enclose a fluid-filled working space (4) which is separated from a compensating space (6) by a partition (5) which is fixed on the bearing mount (1), the partition (5) being penetrated by at least one connection orifice (7) and being formed in a partial region by a resilient wall section (8), the compensating space (6) being closed off towards the outside by a membrane (9) which is fixed on the bearing mount (1), characterized in that the wall section (8) and the membrane (9) are formed by a moulding (10), merging integrally into one another, and in that, at the end of the moulding (10) remote from the resilient wall section (8), said moulding and the partition (5) are connected in a fluid-tight manner, in that the moulding (10) has a projection (10.1), provided with an undercut, in the region of the wall section (8) and is incorporated with the undercut in an opening in the partition (5), and in that the projection (10.1) is surrounded by the opening with a clearance (11).

2. A rubber mount according to claim 1, characterized in that the projection (10.1) is provided with an integrally moulded-on valve tongue (12), and in that the valve tongue (12) covers a secondary opening (13) in the partition (5) on one side in a substantially sealing manner.

3. A rubber mount according to claim 2, characterized in that valve tongue (12) can be deflected into the secondary opening (13).

4. A rubber mount according to either of claims 2 and 3, characterized in that the valve tongue (12) is provided with a tertiary opening (14) in the region of the secondary opening (13), and in that the tertiary opening (14) has a smaller passage cross-section than the secondary opening (13).

5. A rubber mount according to any of claims 2 to 4, characterized in that the secondary opening (13) is constructed by a separation formed without removal of material.

6. A rubber mount according to any of claims 1 to 5, characterized in that the moulding (10) and the partition (5) are compressed by a clamping ring (15) and are connected in a sealing manner in the transition zone of the wall section (8) and membrane (9), which are still separate from one another, to form their integral construction.

## Claims (Claims for the following Contracting State(s): ES, FR, NL, SE)

1. A rubber mount having hydraulic damping, comprising a bearing mount (1) and a support (2) which are connected by a spring element (3) made of rubber-elastic material and enclose a fluid-filled working space (4) which is separated from a compensating space (6) by a partition (5) which is fixed on the bearing mount (1), the partition (5) being penetrated by at least one connection orifice (7) and being formed in a partial region by a resilient wall section (8), the compensating space (6) being closed off towards the outside by a membrane (9) which is fixed on the bearing mount (1), characterized in that the wall section (8) and the membrane (9) are formed by a moulding (10), merging integrally into one another, and in that, at the end of the moulding (10) remote from the resilient wall section (8), said moulding and the partition (5) are connected in a fluid-tight manner.

2. A rubber mount according to claim 1, characterized in that the moulding (10) has a projection (10.1), provided with an undercut, in the region of the wall section (8) and is incorporated with the undercut in an opening in the partition (5).

3. A rubber mount according to claim 2, characterized in that the projection (10.1) is surrounded by the opening with a clearance (11).

4. A rubber mount according to claim 2 or 3, characterized in that the projection (10.1) is provided with an integrally moulded-on valve tongue (12), and in that the valve tongue (12) covers a secondary opening (13) in the partition (5) on one side in a substantially sealing manner.

5. A rubber mount according to claim 4, characterized in that valve tongue (12) can be deflected into the secondary opening (13).

6. A rubber mount according to either of claims 4 and 5, characterized in that the valve tongue (12) is provided with a tertiary opening (14) in the region of the secondary opening (13), and in that the tertiary opening (14) has a smaller passage cross-section than the secondary opening (13).

7. A rubber mount according to any of claims 4 to 6, characterized in that the secondary opening (13) is constructed by a separation formed without removal of material.

8. A rubber mount according to any of claims 1 to 7, characterized in that the moulding (10) and the partition (5) are compressed by a clamping ring (15) and are connected in a sealing manner in the transition zone of the wall section (8) and membrane (9), which are still separate from one another, to form their integral construction.

## Revendications (Revendications pour l'(les) Etat(s) contractant(s) suivant(s): DE, GB, IT)

1. Support en caoutchouc à amortissement hydraulique, comprenant un palier d'appui (1) et un support d'appui (2) qui sont reliés par un élément élastique (3) fait dans une matière de gomme élastique et entourent une chambre de travail (4) remplie de liquide qui est séparée d'une chambre de compensation (6) par une paroi de séparation (5) fixée sur le palier d'appui (1), la paroi de séparation (5) étant percée d'au moins une ouverture de communication (7) et une partie de cette paroi étant formée par un segment (8) de paroi flexible, la chambre de compensation (6) étant fermée, vers l'extérieur, par une membrane (9) fixée sur le palier d'appui (1), ce support étant caractérisé en ce que le segment (8) de paroi et la membrane (9) sont formés par un préformé (10) fait d'une seule pièce confondue et que la paroi de séparation (5) et le préformé (10) sont liés de manière étanche aux liquides à l'extrémité de ce dernier qui est éloignée du segment (8) de paroi flexible, que le préformé (10) présente, dans la région du segment (8) de paroi, une saillie (10.1) pourvue d'une contre-dépouille et qu'il est emboîté, par cette dernière, dans une ouverture découpée dans la paroi de séparation (5) et que la saillie (10.1) est entourée par l'ouverture découpée par un jeu de palier (11).

2. Support en caoutchouc selon la revendication 1, caractérisé en ce que la saillie (10.1) est pourvue d'une langue (12) formée par une pièce solidaire agissant comme une soupape et que la langue (12) agissant comme une soupape recouvre de manière essentiellement étanche, sur un côté, une ouverture secondaire (13) découpée dans la paroi de séparation (5).

3. Support en caoutchouc selon la revendication 2, caractérisé en ce que la langue (12) agissant comme une soupape peut être comprimée dans l'ouverture secondaire (13).

4. Support en caoutchouc selon les revendications 2 à 3, caractérisé en ce que la langue (12) agissant comme une soupape est pourvue, dans la région de l'ouverture secondaire (13), d'une ouverture tertiaire (14) et que l'ouverture tertiaire (14) a une section de passage inférieure à celle de l'ouverture secondaire (13).

5. Support en caoutchouc selon les revendications 2 à 4, caractérisé en ce que l'on exécute l'ouverture secondaire (13) en réalisant une incision sans retrait de matière.

6. Support en caoutchouc selon les revendications 1 à 5, caractérisé en ce que le préformé (10) et la paroi de séparation (5) sont pressés par un anneau de serrage (15) et reliés de manière étanche dans la zone de transition allant du segment (8) de paroi encore séparé de la membrane (9) à leur agencement monobloc.

## Revendications (Revendications pour l'(les) Etat(s) contractant(s) suivant(s): ES, FR, NL, SE)

1. Support en caoutchouc à amortissement hydraulique, comprenant un palier d'appui (1) et un support d'appui (2) qui sont reliés par un élément élastique (3) fait dans une matière de gomme élastique et entourent une chambre de travail (4) remplie de liquide qui est séparée d'une chambre de compensation (6) par une paroi de séparation (5) fixée sur le palier d'appui (1), la paroi de séparation (5) étant percée d'au moins une ouverture de communication (7) et une partie de cette paroi étant formée par un segment (8) de paroi flexible, la chambre de compensation (6) étant fermée, vers l'extérieur, par une membrane (9) fixée sur le palier d'appui (1), ce support étant caractérisé en ce que le segment (8) de paroi et la membrane (9) sont formés par un préformé (10) fait d'une seule pièce confondue et que la paroi de séparation (5) et le préformé (10) sont liés de manière étanche aux liquides à l'extrémité de ce dernier qui est éloignée du segment (8) de paroi flexible.

2. Support en caoutchouc selon la revendication 1, caractérisé en ce que le préformé (10) présente, dans la région du segment (8) de paroi, une saillie (10.1) pourvue d'une contre-dépouille et qu'il est emboîté, par cette dernière, dans une ouverture découpée dans la paroi de séparation (5).

3. Support en caoutchouc selon la revendication 2, caractérisé en ce que la saillie (10.1) est entourée par l'ouverture découpée avec un jeu de palier (11).

4. Support en caoutchouc selon l'une des revendications 2 ou 3, caractérisé en ce que la saillie (10.1) est pourvue d'une langue (12) formée par une pièce solidaire agissant comme une soupape et que la langue (12) agissant comme une soupape recouvre de manière essentiellement étanche, sur un côté, une ouverture secondaire (13) découpée dans la paroi de séparation (5).

5. Support en caoutchouc selon la revendication 4, caractérisé en ce que la langue (12) agissant comme une soupape peut être comprimée dans l'ouverture secondaire (13).

6. Support en caoutchouc selon les revendications 4 et 5, caractérisé en ce que la langue (12) agissant comme une soupape est pourvue, dans la région de l'ouverture secondaire (13), d'une ouverture tertiaire (14) et que l'ouverture tertiaire (14) a une section de passage inférieure à celle de l'ouverture secondaire (13).

7. Support en caoutchouc selon les revendications 4 à 6, caractérisé en ce que l'on exécute l'ouverture secondaire (13) en réalisant une incision sans retrait de matière.

8. Support en caoutchouc selon les revendications 1 à 7, caractérisé en ce que le préformé (10) et la paroi de séparation (5) sont pressés par un anneau de serrage (15) et reliés de manière étanche dans la zone de transition allant du segment (8) de paroi encore séparé de la membrane (9) à leur agencement monobloc.
